# EUROPÄISCHE PATENTSCHRIFT

(11) **EP 1 753 601 B1**
(45) Veröffentlichungstag und Bekanntmachung des Hinweises auf die Patenterteilung: **20.02.2013**
(21) Anmeldenummer: 05759929.2
(22) Anmeldetag: 24.05.2005
(51) Int. Cl.: B29C 67/00, B41M 3/16

(54) **VERFAHREN ZUM HERSTELLEN EINES DREIDIMENSIONALEN ARTIKELS**
METHOD FOR PRODUCTION OF A THREE-DIMENSIONAL ARTICLE
PROCEDE DE FABRICATION D'UN ARTICLE EN TROIS DIMENSIONS

(30) Priorität: 24.05.2004 DE 102004025374
(43) Veröffentlichungstag der Anmeldung: 21.02.2007
(73) Patentinhaber: voxeljet technology GmbH, 86316 Friedberg (DE)
(72) Erfinder: ELSNER, Philip, 16562 Bergfelde (DE); DREHER, Stefan, 10245 Berlin (DE); EDERER, Ingo, c/o voxeljet technology GmbH, 86316 Friedberg (DE); VOIT, Brigitte, c/o IPF Dresden E.V., 01069 Dresden (DE); JANKE, Gudrun, c/o IPF Dresden E.V., 01069 Dresden (DE); STEPHAN, Michael, c/o IPF Dresden E.V., 01069 Dresden (DE)
(74) Vertreter: Bittner, Thomas L.
(86) Internationale Anmeldenummer: PCT/DE2005/000950
(87) Internationale Veröffentlichungsnummer: WO 2005/113219

(56) Entgegenhaltungen:
- EP-A- 1 415 792
- EP-A- 1 442 870
- WO-A-03/016067
- WO-A-2004/010907
- AU-B2- 720 255
- US-A- 6 164 850
- US-A- 6 165 406

## Beschreibung

Die Erfindung bezieht sich auf ein Verfahren zum Herstellen eines dreidimensionalen Artikels aus einem Material mittels schichtweisem Auftrag.

Derartige Verfahren werden beispielsweise genutzt, um Modelle von dreidimensionalen Körpern zu erzeugen, was auch als "Rapid Prototyping" bezeichnet wird. Unter "Rapid Prototyping" wird der Technologiebereich zusammengefasst, der sich mit der schnellen und automatischen generativen Herstellung von dreidimensionalen Objekten beschäftigt. Hierbei wird ein CAD-Modell des herzustellenden Objektes mittels eines geeigneten Softwareprogramms in horizontale Schnitte zerlegt und die zweidimensionalen Schnitte dann sequentiell in einem geeigneten Verfahren in reale Schichten des Objektes umgesetzt und so das Objekt vollständig schichtweise aufgebaut.

Bekannte Verfahren, die eine hochfrequente Mikro-Tropfendosierung zum Aufbau von dreidimensionalen Kunststoffbauteilen nutzen, wie sie beispielsweise mittels Ink-Jet-Düsen realisiert wird, sind das 3D-Printing (3DP), das Ballistic Modeling (BPM) und das Ink-Jet-Drucken.

Das 3D-Printing wird beispielsweise in dem Dokument US 5,204,055 beschrieben. Bei diesem Verfahren wird ein Binder in Tropfenform auf eine Pulverschicht dosiert, so dass das Pulver selektiv der Schnittinformation entsprechend verklebt wird. Nach dem Auftragen der nächsten Pulverschicht wird erneut der Binder ortsselektiv aufgetragen usw.. Das entstehende Bauteil besteht hauptsächlich aus dem aufgetragenen Pulver, nur der Binder wird mittels Ink-Jet-Düse aufgetragen. Aus der Sicht der Kunststoffverarbeitung können mit diesem Verfahren nur Ansichts-/Designmodelle hergestellt werden. Die entstehenden Bauteile weisen hinsichtlich ihrer Materialeigenschaften keinerlei Ähnlichkeit mit Kunststoffserienteilen auf.

In den Dokumenten US 4,665,492, US 5,134,569, US 5,216,616 und US 5,555,176 wird ein als "Ballistic Particle Manufacturing" (BPM) bekanntes Verfahren beschrieben. Bei dem Verfahren wird das eigentliche Baumaterial für das Objekt als Masseteilchen oder Tröpfchen mittels 5-achsig arbeitendem Dispenser auf vorher ausgehärtete Schichten des Objektes aufgetragen. Zur Erzeugung von Kunststoffbauteilen wird der Auftrag von Plastikpartikeln in einer ionisierten Atmosphäre, der Auftrag von photopolymerisierbaren Harzen mit anschließendern Bestrahlungsschritt zur Polymerisationsauslösung und die Verwendung von einem schmelzbaren Baumaterial, das mittels Erstarren das Bauteil aufbaut, beschrieben. Die erzeugten Kunststoffmodelle sind spröde. Eine ausreichende Positioniergenauigkeit des Dispensers ist wegen der gewollten vielfältigen Bewegungsmöglichkeiten des Dispensers technisch nur sehr aufwendig und damit teuer zu realisieren. BPM hat sich aufgrund dieser gravierenden Nachteile bei Anwendungen nicht durchgesetzt.

In den Dokumenten US 5,059,266, US 5,140,937 und US 5,149,548 wird ein Ink-Jet-Druck-Verfahren beschrieben. Bei diesem Verfahren wird mittels Ink-Jet-Düsen, die sich unterhalb der Bauplattform befinden, ein härtbares Baumaterial entgegen der Schwerkraft in Objektform aufgebracht. Im zweiten Schritt wird das aufgebrachte Material durch Energieeintrag gehärtet. Es können mittels Licht härtbare (vgl. US 5,059,266), mittels Wärme härtbare (vgl. US 5,140,937) oder 2-komponentige (vgl. US 5,149,548) Werkstoffe verwendet werden. Bei den 2-Komponentenwerkstoffen wird die eine Komponente, der Härter, in der anderen Komponente als Mikrokapsel homogen dispergiert. Nach dem Auftrag auf eine bei der Herstellung genutzte Bauplattform werden die Mikrokapseln mittels zusätzlichem Energieeintrag zerstört und so das Material ausgehärtet. Mit diesem Verfahren ist es nahezu unmöglich, Überhänge/Hinterschnitte oder andere nicht-selbsttragende Strukturen zu realisieren. Außerdem handelt es sich um ein 2-Schritt-Verfahren, es sind also zusätzliche Energiequellen, die mit erhöhten Kosten einhergehen, zur Reaktionseinleitung notwendig. Diese gravierenden Nachteile haben dazu geführt, daß aus dem Prinzip des "gegen die Schwerkraft Druckens" kein kommerzielles Gerät entwickelt wurde.

In dem Dokument US 5,136,515 ist ein Ink-Jet-Druckverfahren beschrieben, bei dem dreidimensionale Objekte mittels schichtweisem Tropfenauftrag zweier verschiedener härtbarer Materialien erzeugt werden. Die Materialien müssen im Anschluß an den Bauprozeß voneinander trennbar sein. Die Materialien unterscheiden sich zur besseren Trennung beispielsweise durch unterschiedliche Schmelzpunkte und ihr Verhalten gegenüber Lösemitteln. Der eigentliche Objektaufbau erfolgt mittels eines temperaturbedingten Phasenwechsels flüssig-fest und/oder mittels nachfolgender Strahlenhärtung des Baumaterials. Als Beispiel ein Material ist Wachs angegeben.

In den Dokumenten US 5,506,607, US 5,740,051 und US 6,305,769 werden ausführlich prozeßtechnische Umsetzungen des oben beschriebenen Verfahrens beschrieben. Dies führte zur Entwicklung von kommerziell erhältlichen Ink-Jet-"Wachs"druckern, zum Beispiel Model-Maker II^{®} von Solidscape; Thermojet^{®} von 3D-Systems. Die zum Modellaufbau genutzten Materialmischungen werden beispielsweise in den Dokumenten US 6,395,811, US 6,133,353, US 6,582,613 und US 6,476,122 näher beschrieben. Bei den Materialien ist unabhängig von der chemischen Zusammensetzung immer der physikalische Phasenwechsel flüssig-fest die Basis des Modellaufbaus (phase change solid imaging material). Es kann noch ein strahleninduzierter Vernetzungsschritt folgen, wie in dem Dokument US 2003/0083771 beschrieben.

Aufgrund der hohen Detailgenauigkeit bzw. Auflösung sind die durch Wachsdrucker erzeugten Modelle sehr gut als Positive für Wachsausschmelzverfahren und den Feinguß geeignet. Zur Verwendung als Funktionsprototypen oder als Serienteile sind sie jedoch aufgrund der Materialeigenschaften der Wachse, insbesondere deren Sprödigkeit und mangelnden Wärmeformbeständigkeit, völlig ungeeignet.

Ein weiteres Ink-Jet-Druckverfahren wird in dem Dokument US 6,259,962 beschrieben. Ein Photopolymer wird mittels Ink-Jet-Düsen ortsselektiv aufgetragen und in einem zweiten Schritt mit Hilfe von Strahlung zur Reaktion gebracht. Aufgrund der benötigten Strahlungsquelle und entsprechender Schutzvorrichtungen ist das Verfahren teuer. Außerdem besteht nur ein sehr eingeschränktes Materialspektrum, da die Photopolymere eine sehr niedrige Viskosität aufweisen müssen, um druckfähig zu sein. Außerdem ist die Nutzung von Füllstoffen zur Pigmentierung oder Verbesserung der Materialeigenschaften verhindert, da durch ihren Zusatz die zur Photopolymerisation notwendige Lichtabsorption verhindert wird.

In dem Dokument US 2002/0111707 A1 wird ein Verfahren beschrieben, in dem ein bei Raumtemperatur festes Präpolymer-Gemisch als Schmelze über Ink-Jet-Düsen oder schwingungsgesteuerte Dosiereinrichtungen gezielt abgelegt wird. Die Reaktion zum Polymer wird durch gezielte Temperaturführung eingeleitet, alle notwendigen Reaktionskomponenten befinden sich in dem dosierten Präpolymer-Gemisch. Es sollen lineare Polymere, vorwiegend Polyamide entstehen. Auch bei diesem Verfahren handelt es sich um ein 2-Schritt-Verfahren: Erst die gezielte Materialabgabe, dann später die Reaktionseinleitung. Es ist zu erwarten, daß die beschriebene Temperaturführung einerseits zu ungewollter Reaktion in den Dosierkörpern führt, da alle Reaktionspartner gleichzeitig durch eine Düse dosiert werden. Andererseits wird die Konturgenauigkeit negativ beeinflußt, da ein erneutes Erwärmen der schon abgelegten Kontur zum Zerfließen führt.

Des weiteren ist aus dem Dokument GB 2,382,798 A ein Verfahren bekannt, bei dem mit Hilfe einer Düsenanordnung, die Tintenstrahl-Druckköpfe umfaßt, zwei Flüssigkeiten tröpfchenweise zum Herstellen eines dreidimensionalen Artikels ausgebracht werden, so daß die Flüssigkeiten nach Kontakt zwischen beiden chemisch miteinander reagieren, um ein Material zu bilden, dessen Eigenschaften sich von denen der separaten Flüssigkeiten unterscheiden. Mit Hilfe des beschriebenen Verfahrens werden beispielsweise Leiterplatten hergestellt. Die tröpfchenweise ausgebrachten Flüssigkeiten können mit Hilfe der Düsenanordnung so ausgestoßen werden, daß Tropfen der beiden Flüssigkeiten noch im Flug oder erst beim Auftreffen miteinander in Kontakt treten.

Aus dem Dokument WO 03/016030 A1 ist ein Verfahren zum Herstellen eines dreidimensionalen Artikels nach einem Modell des Artikels mit Hilfe schichtweisem Auftrag bekannt. Bei dem Verfahren wird eine Schicht aus einem ersten Material gebildet. Bei dem ersten Material kann es sich um ein Pulver oder eine Flüssigkeit handeln. Anschließend wird tröpfchenweise ein zweites Material auf die Schicht des ersten Materials aufgebracht, was entsprechend dem Modell des Artikels geschieht. Diese Verfahrensschritte werden mehrfach wiederholt, um den dreidimensionalen Artikel herzustellen. Der dreidimensionale Artikel entsteht beim schichtweisen Auftrag, indem auch zwischen den Schichten chemische Bindungen gebildet werden. Die Tröpfchen des zweiten Materials können nach verschiedenen Mustern auf die Schicht aus dem ersten Material mit Hilfe der Düsenanordnung aufgebracht werden, um mikroskopische oder makroskopische Eigenschaften des dreidimensionalen Artikels zu variieren. Beispielsweise können hierdurch mechanische Eigenschaften des hergestellten Artikels variiert werden. Zusätzlich zu den Tröpfchen des zweiten Materials können Tröpfchen eines weiteren Materials mittels der Düsenanordnung ausgestößen und auf der Schicht des ersten Materials aufgebracht werden, wobei solche Flüssigkeitströpfchen im Flug oder auf der Oberfläche der Schicht aus dem ersten Material zusammentreffen können. Bei dem hergestellten Artikel können die Eigenschaften wenigstens einiger der aufgebrachten Schichten innerhalb der Schich variieren, und/oder die Eigenschaften des Materials sind von Schicht zu Schicht in dem Artikel verschieden.

In dem Dokument WO 02/064353 A1 ist ebenfalls ein Verfahren zum Herstellen eines dreidimensionalen Artikels nach einem Modell des Artikels mit Hilfe schichtweisem Auftrag beschrieben. Bei dem bekannten Verfahren wird auf eine Flüssigkeitsschicht eines ersten Materials tröpfchenweise eine zweite Flüssigkeit mit einer Viskosität im Bereich von 2 bis 500cps bei Raumtemperatur aufgebracht.

In ähnlicher Weise ist in dem Dokument WO 02/064354 A1 ein Verfahren zum Herstellen eines dreidimensionalen Artikels mittels schichtweisem Tropfenauftrag beschrieben. Im Unterschied zu den vorgenannten Verfahren wird die Schicht aus dem ersten Material mit Hilfe eines Pulvermaterials gebildet.

In dem Dokument US 6,165,406 werden ein Verfahren und eine Vorrichtung zum Herstellen eines farbigen dreidimensionalen Objektes beschrieben. Bei der Herstellung des Objektes werden von einer Tropfenabgabevorrichtung Tropfen verschiedener Flüssigkeitszusammensetzungen abgegeben, die jeweils aus einem verfestigbaren Basismaterial und unterschiedlichen Farbstoffen bestehen. Je nach gewünschter farblicher Ausgestaltung des herzustellenden dreidimensionalen Objektes werden Tropfen der verschiedenfarbigen Materialien aufgetragen. Die derart aufgebrachten Tropfen verfestigen sich dann auf der Targetoberfläche. Mit Hilfe der Farbtropfen können so auch graduelle Farbübergänge in dem dreidimensionalen Objekt hergestellt werden, indem Tropfen der unterschiedlich farbigen Materialien aufgebracht werden.

Das Dokument WO 03/016067 beschreibt ein Verfahren und eine Vorrichtung zum Herstellen eines Prototyps eines dreidimensionalen Artikels, wobei ein beispielsweise pulverförmiges erstes Material ausgebracht wird, welches dann mittels zusätzlichem Ausbringen eines Binders gebunden wird.

Das Dokument AU 720255 B2 (siehe auch WO 97/32671) offenbart ein Verfahren zum Herstellen eines dreidimensionalen Artikels. Eine Basiskomponente und eine Reaktionskomponente bilden ein Reaktionssystem, mit dem bei der Reaktion nach dem Kontakt ein festes Material, beispielsweise ein fest vernetzter Kunststoff gebildet wird.

Aufgabe der Erfindung ist es, ein verbessertes Verfahren zum Herstellen eines dreidimensionalen Artikels aus einem Material mittels schichtweisen Auftrags anzugeben, bei denen eine möglichst vielseitige Variation von Materialeigenschaften des dreidimensionalen Artikels erreicht werden kann.

Diese Aufgabe wird erfindungsgemäß durch ein Verfahren nach dem unabhängigen Anspruch 1 gelöst.

Die Erfindung umfaßt den Gedanken, ein Verfahren zum Herstellen eines dreidimensionalen Artikels aus einem Material mittels schichtweisen Auftrags auf einer Unterlage vorzuschlagen, bei dem:
a. ein Tropfenauftrag ausgeführt wird, bei dem Tropfen von Reaktionskomponenten mittels einer Düsenanordnung ausgestoßen und auf eine aufgebrachte Basisreaktionskomponente aufgetragen werden;
b. das Material für den dreidimensionalen Artikel gebildet wird, wenn bei Kontakt die Basisreaktionskomponente mit den Reaktionskomponenten jeweils reagiert, wobei das Material bei einer Reaktion der Basisreaktionskomponente mit einer der Reaktionskomponenten als Material mit einer Materialeigenschaft und bei einer anderen Reaktion der Basisreaktionskomponente mit einer anderen der Reaktionskomponenten als Material mit einer anderen Materialeigenschaft gebildet wird, wobei die Schritte a. und b. zum Bilden des dreidimensionalen Artikels mehrfach wiederholt werden; und
c. ein Artikelabschnitt mit einem graduellen Übergang zwischen der einen Materialeigenschaft und der anderen Materialeigenschaft erzeugt wird, indem:
   cl. in einem Endbereich des Artikelabschnitts beim Tropfenauftrag erste Reaktionsparameter für die Tropfen der einen Reaktionskomponente und die Tropfen der anderen Reaktionskomponente eingestellt werden, so daß in dem Endbereich des Artikelabschnitts nach dem Tropfenauftrag überwiegend oder ausschließlich das Material mit der einen Materialeigenschaft gebildet wird;
   c2. in einem entgegengesetzten Endbereich des Artikelabschnitts beim Tropfenauftrag zweite Reaktionsparameter für die Tropfen der einen Reaktionskomponente und die Tropfen der anderen Reaktionskomponente eingestellt werden, so daß in dem anderen Endbereich des Artikelabschnitts nach dem Tropfenauftrag überwiegend oder ausschließlich das Material mit der anderen Materialeigenschaft gebildet wird; und
   c3. in einem Zwischenbereich des Artikelabschnitts zwischen den beiden Endbereichen beim Verlagern der Düsenanordnung von dem Endbereich zu dem entgegengesetzten Endbereich beim Tropfenauftrag veränderliche Zwischenreaktionsparameter für die Tropfen der einen Reaktionskomponente und die Tropfen der anderen Reaktionskomponente eingestellt werden, so daß ein gradueller Übergang zwischen den ersten Reaktionsparametern und den zweiten Reaktionsparametern ausgeführt wird.

Die Erfindung hat gegenüber bekannten Verfahren zum Herstellen dreidimensionaler Artikel den Vorteil, daß bei der Herstellung des Artikels eine oder mehrere Artikelabschnitte geschaffen werden können, in denen ein gradueller Übergang zwischen zwei voneinander abweichenden Materialeigenschaften des zur Herstellung des Artikels genutzten Materials ausbildbar sind. Auf diese Weise ist es beispielsweise möglich, in dem Artikelabschnitt mit dem graduellen Übergang den Übergang zwischen einem eher starren Materialabschnitt und einem eher elastisch verformbaren Abschnitt des hergestellten dreidimensionalen Artikels zu schaffen. Das Verfahren kann kostengünstig umgesetzt werden, da zur Tropfendosierung beispielsweise kommerziell verfügbare Druckdüsen genutzt werden können, die keine zusätzliche aufwendige Technik zur Leitung der Basisreaktionskomponente und der Reaktionskomponenten benötigen.

Es besteht weiterhin der Vorteil, daß der graduelle Übergang lokal begrenzt oder über den gesamten Artikel verteilt werden kann. Weiterhin ist es möglich, einen oder mehrere graduelle Übergänge in dem Artikel herzustellen.

In einer Ausgestaltung des Verfahrens ist bei der Erfindung vorgesehen, daß die Basisreaktionskomponente und/oder die Reaktionskomponenten mit einer Viskosität zwischen etwa 0.5 und 50mPa bei einer vorbestimmten Dosierungstemperatur verwendet werden.

In einer weiteren Ausgestaltung des Verfahrens ist vorgesehen, daß die Basisreaktionskomponente und/oder die Reaktionskomponenten mit einer Grenzflächenspannung zwischen etwa 20 und 70mN/m bei einer vorbestimmten Dosierungstemperatur verwendet werden.

Vorteilhafte Ausgestaltungen des Verfahrens sind Gegenstand abhängiger Unteransprüche.

Die Erfindung wird im folgenden anhand von Ausführungsbeispielen unter Bezugnahme auf eine Zeichnung näher erläutert. Hierbei zeigen:
- Fig. 1: eine schematische Darstellung einer Vorrichtung zum Herstellen eines dreidimensionalen Artikels mittels Tropfenauftrag;
- Fig. 2: eine schematische Darstellung einer anderen Vorrichtung zum Herstellen eines dreidimensionalen Artikels mittels Tropfenauftrag;
- Fig. 3: eine perspektivische Darstellung der Vorrichtung nach Fig. 2; und
- Fig. 4: eine schematische Darstellung zur Erläuterung eines Verfahrens, bei dem während des schichtweisen Auftrags die Schichtdicke der aufgetragenen Schichten in Abhängigkeit von Meßdaten für eine vorher aufgetragene Schicht geregelt wird.

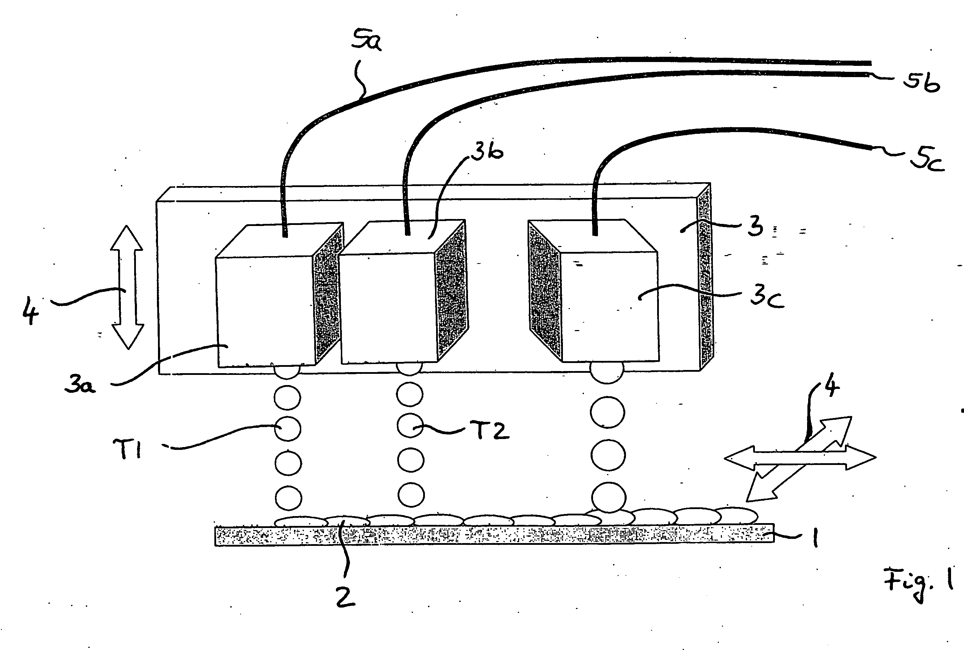

Fig. 1 zeigt eine schematische Darstellung einer Vorrichtung zum Herstellen eines dreidimensionalen Artikels mittels Tropfenauftrag. Auf einer Bauplattform 1 ist eine Schicht 2 einer Basisreaktionskomponente B aufgebracht. Mit Hilfe einer Düsenanordnung 3, die zwei Düsen 3a, 3b umfaßt, werden Tropfen T1 einer Reaktionskomponente R1 sowie Tropfen T2 einer weiteren Reaktionskomponente R2 auf die Schicht 2 der Basisreaktionskomponente B aufgebracht. Hierbei wird die Düsenanordnung 3 über die Schicht 2 der Basisreaktionskomponente B bewegt, wozu ein Fig. 1 schematisch dargestellter Verlagerungsmechanismus 4 verwendet wird, der mit Hilfe von elektronischen Steuersignalen betätigt wird und in Fig. 1 mittels Pfeilen schematisch dargestellt ist. Die Düsen 3a, 3b, 3c die beispielsweise mit Hilfe von Tintenstrahl-Druckköpfen basieren, sind über Steuerleitungen 5a, 5b, 5c mit einer Steuereinrichtung (nicht dargestellt) verbunden, so daß das Ausbringen der Tropfen mit Hilfe von über die Steuerleitungen 5a, 5b, 5c übermittelten Steuersignalen steuerbar ist. Die Reaktionskomponenten R1, R2 und die Basisreaktionskomponente B werden den Düsen 3a, 3b, 3c jeweils aus Vorratsbehältern über Versorgungsleitungen zugeführt, die in die Düsenanordnung 3 integriert sein können oder hiervon getrennt ausgebildet sind. Zum Ausbilden des dreidimensionalen Artikels wird der beschriebene Schichtauftrag wiederholt.

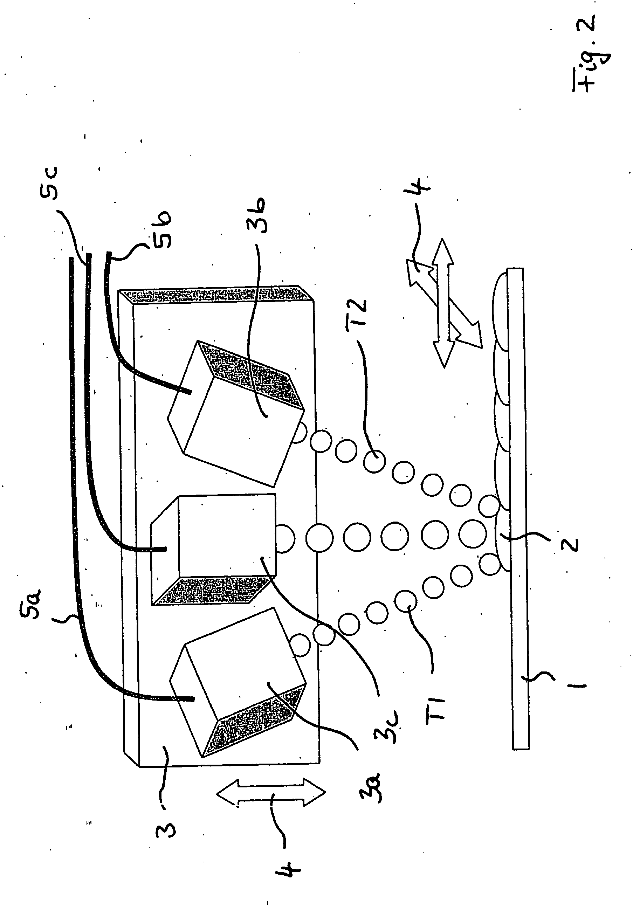

Fig. 2 zeigt eine schematische Darstellung einer anderen Vorrichtung zum Herstellen eines dreidimensionalen Artikels mittels Tropfenauftrag. Gleiche Merkmale sind in Fig. 2 mit gleichen Bezugszeichen wie in Fig. 1 bezeichnet. Im Unterschied zu der Vorrichtung nach Fig. 1 sind die beiden Düsen 3a, 3b bei der anderen Vorrichtung nach Fig. 2 so ausgerichtet, daß die Tropfen T1 der Reaktionskomponente R1 und die Tropfen T2 der Reaktionskomponente R2 im wesentlichen in einem gleichen Bereich der Schicht 2 der Basisreaktionskomponente B auftreffen. Hierbei kann die Ausstoßrichtung der Düsen 3a, 3b so eingestellt sein, daß die Tropfen T1 der Reaktionskomponente R1 und die Tropfen T2 der Reaktionskomponente R2 noch vor dem Auftreffen auf der Schicht 2 der Basisreaktionskomponente B aufeinander treffen. Auf diese Weise ist es möglich, einen Tropfen T1 der Reaktionskomponente R1 gemeinsam mit einem Tropfen T2 der Reaktionskomponente R2 auf die Schicht der Basisreaktionskomponente B aufzubringen. Alternativ ist es jedoch auch möglich, daß ein Tropfen T1 der Reaktionskomponente R1 und ein Tropfen T2 der Reaktionskomponente R2 in einem definierten zeitlichen Abstand zueinander auf ein und denselben Bereich der Schicht 2, beispielsweise ein und denselben Tropfen der Basisreaktionskomponente B aufgebracht werden.

Mit Hilfe der Vorrichtung nach Fig. 1 sowie der anderen Vorrichtung nach Fig. 2 ist es möglich, beim Schichtauftrag einen Tropfen oder einen Bereich der Basisreaktionskomponente B auf der Bauplattform 1 mit unterschiedlichen Mengen der Reaktionskomponente R1 und der Reaktionskomponente R2 in Kontakt zu bringen. Dieses kann beispielsweise dadurch geregelt werden, daß die mit Hilfe der Düsen 3a, 3b ausgestoßene Tropfengröße geregelt wird. Des weiteren können für die Tropfen T1 der Reaktionskomponente R1 und die Tropfen T2 der Reaktionskomponente R2 auch andere Reaktionsparameter individuell eingestellt werden, beispielsweise die Temperatur, die Ausstoßgeschwindigkeit und/oder die individuelle chemische Zusammensetzung. Auf diese Weise ist es möglich, physikalische und/oder chemische Eigenschaften in Abschnitten des schichtweise hergestellten Artikels so zu variieren, daß ein gradueller Übergang zwischen zwei Materialeigenschaften gebildet wird. Beispielsweise kann der hergestellte Artikel innerhalb einer aufgetragenen Schicht und/oder über mehrere Schichten einen oder mehrere Übergänge zwischen einem eher starren Material und einem eher elastisch verformbaren Material aufweisen.

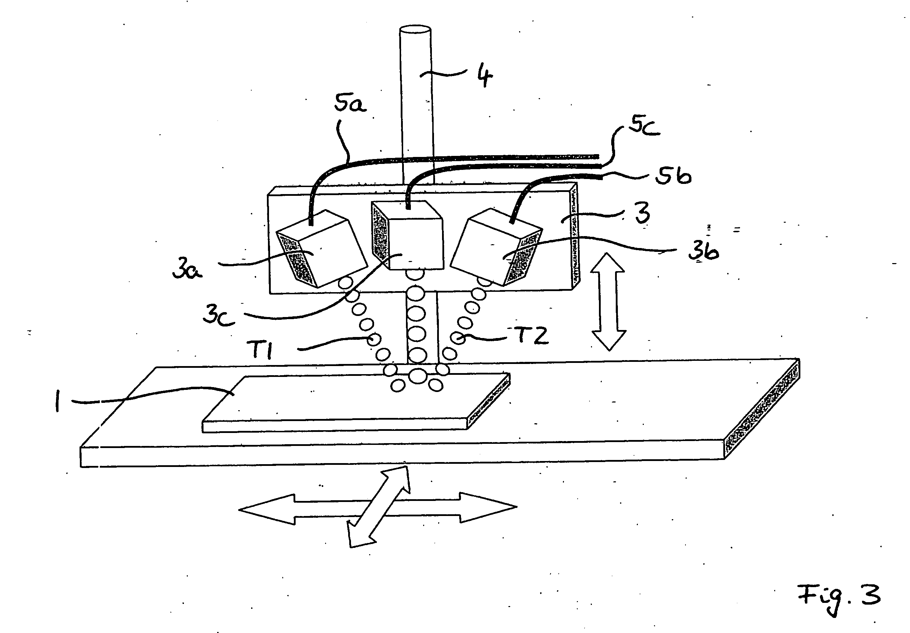

Fig. 3 zeigt die andere Vorrichtung nach Fig. 2 in einer weiteren Ausgestaltung, bei der die Düsenanordnung 3 in z-Richtung und die Bauplattform 1 in x- und y-Richtung mit Hilfe des Verlagerungsmechanismus 4 verlagerbar sind, um die für den schichtweisen Auftrag notwendige Relativbewegung der Düsenanordnung 3 zu der Bauplattform 1 zu ermöglichen. In Fig. 3 sind gleiche Merkmale mit den gleichen Bezugszeichen wie in den Fig. 1 und 2 bezeichnet.

Ein dreidimensionales Kunststoffbauteil wird mittels ortsselektivem schichtweisen Auftragen der zwei Reaktionskomponenten R1 und R2 in flüssiger Form auf die Basisreaktionskomponente B erzeugt, wobei die Reaktionskomponenten R1, R2 bei Kontakt jeweils mit der Basisreaktionskomponente B reagieren, wodurch bei der Reaktion der Reaktionskomponenten R1 mit der Basiskomponente B ein Material M1 mit einer Materialeigenschaft E1 und bei der Reaktion der Reaktionskomponenten R2 mit der Basiskomponente B das Material M1 mit einer Materialeigenschaft E2 gebildet wird. Bei geeigneter Auswahl der Basisreaktionskomponente B und der Reaktionskomponenten R1, R2 kann auch vorgesehen sein, daß bei der Reaktion der Reaktionskomponenten R2 mit der Basisreaktionskomponente B ein anderes Material M2 mit der Materialeigenschaft E2 gebildet wird, wobei das Material M1 und das andere Material M2 miteinander verträglich sind. Bei dem Material M1 und dem anderen Material M2 handelt es sich beispielsweise jeweils um einen festen vernetzten Kunststoff.

Die Basisreaktionskomponente B kann als Materialgemisch vorliegen, was zum Beispiel einen Füllstoff enthält, beispielsweise Glasfasern, Mikrokugeln oder dergleichen, um die Materialeigenschaften des hergestellten Materials zu beeinflussen. Die Mischung könnte sogar so verändert werden, daß der überwiegende Anteil von dem Füllstoff gebildet wird, zum Beispiel ein Füllstoff in Partikelform. Dies bewirkt zweierlei, zum, einen können die Stoffeigenschaften gezielt beeinflußt werden und zum anderen sinkt die zu dosierende Materialmenge im Verhältnis zur Volumenverfestigung, der Prozeß zum Herstellen des dreidimensionalen Artikels baut wesentlich schneller. So könnte ein Füllstoff mit der Basisreaktionskomponente B lediglich beschichte sein. Das Materialgemisch kann schüttfähig oder pastenförmig sein. Die Basisreaktionskomponente B kann mittels Aufrakeln oder Auftragen mit bekannten Beschichtungsverfahren, zum Beispiel Rollen, Streichen, Sprühen, Spritzen, Abziehen, aufgetragen werden. Der Auftrag der Reationskomponenten R1 und R2 erfolgt dann ortsselektiv.

Notwendige Schichtinformationen beim schichtweisen Bilden des dreidimensionalen Artikels werden den gängigen Rapid-Prototyping-Verfahren entsprechend direkt aus CAD-Konstruktionsdaten des zu erzeugenden Artikels generiert. Mit auf diese Weise gewonnenen Steuerungsdaten werden die Düsenanordnung 3 und die Bauplattform 1 relativ zueinander bewegt und der Tropfenausstoß der Düsen 3a, 3b gesteuert. Die Düsen 3a, 3b der Düsenanordnung 4 sind mit temperierbaren Vorratsbehältern, die die Reaktionskomponenten R1, R2 und gegebenenfalls die Basisreaktionskomponente B enthalten, verbunden.

Nach einer Ausführungsform umfaßt das Herstellungsverfahren die folgenden Schritte:
a) In einem Bauraum mit kontrollierbarer Temperatur und Bauraumatmosphäre befindet sich die in z-Richtung bewegliche Bauplattform 1 so in einer Wanne, die mit einer der Basisreaktionskomponente B gefüllt ist, daß über der Bauplattform 1 eine Schicht der Basisreaktionskomponente B definierter Dicke entsteht.
b) Entsprechend den Steuerungsdaten werden mit Hilfe der in x- und y-Richtung beweglichen temperierbaren Düsenanordnung 3 ortsselektiv die Reaktionskomponenten R1, R2 auf die Bauplattform 1 aufgebracht. Mittels chemischer Reaktion der Basisreaktionskomponente B mit einer oder beiden Reaktionskomponenten R1, R2 entsteht eine erste Schicht des zu erzeugenden Artikels.
c) Anschließend wird die Bauplattform 1 abgesenkt, so daß über der ersten Schicht des Bauteils eine Schicht der Basisreaktionskomponente B definierter Dicke erzeugt wird. Danach wird der Verfahrensschritt b) ausgeführt.
d) Der Schritt c) wird mehrfach wiederholt, bis der gesamte Artikel erzeugt ist.

Die Basisreaktionskomponente B und die Reaktionskomponenten R1, R2 sind hinsichtlich ihrer Dichte aufeinander abgestimmt, so daß überschüssige Anteile der Basisreaktionskomponente B und/oder der Reaktionskomponenten R1, R2 in der Wanne eine Stützfunktion für Überhänge des Artikels übernehmen.

Nach einer anderen Ausführungsform umfaßt das Herstellungsverfahren die folgenden Schritte:
a) In einem Bauraum mit kontollierbarer Temperatur und Bauraumatmosphäre sind die in z-Richtung bewegliche Bauplattform 1 und die in x- und y-Richtung bewegliche Düsenanordnung 3 mit temperierbaren Ink-Jet-Düsen angeordnet, wobei eine Düse mit dem Vorratsbehälter für die Basisreaktionskomponente B, eine weitere Düse mit dem Vorratsbehälter für die Reaktionskomponente R1 und eine andere Düse mit dem Vorratsbehälter für die Reaktionskomponente R2 verbunden sind, so daß die Basisreaktionskomponente B, die Reaktionskomponente R1 und die Reaktionskomponente R2 jeweils tropfenweise ausgebracht werden können.
b) Entsprechend den Steuerungsdaten tragen die Düsen die Basisreaktionskomponente B, die Reaktionskomponente R1 und die Reaktionskomponente R2 derart auf die Bauplattform 1 auf, das mittels anschließender chemischer Reaktionen der Basisreaktionskomponente B mit der Reaktionskomponente R1 und/oder der Reaktionskomponente R2 eine erste Schicht des zu erzeugenden Artikels entsteht.
c) Die Baualattform 1 wird um eine Schichtdicke abgesenkt.
d) Der Verfahrensschritt b) wird wiederholt, bis der gesamte Artikel erzeugt ist.

Die beiden Reaktionskomponenten R1, R2 können auf ein und demselben Tropfen der Basisreaktionskomponente B abgelegt werden. Dieses kann zeitgleich oder zeitlich versetzt erfolgen. Unter "kontrollierbarer Temperatur" im Bauraum ist zu verstehen, das der gesamte Bauraum oder Teile hiervon auf einer definierte Temperatur gehalten werden. Der Begriff "kontrollierbare Bauraumatmosphäre" in der hier verwendeten Bedeutung beschreibt, daß die Art der Atmosphäre, also beispielsweise Luft oder Stickstoff oder Argon, einstellbar ist.

Die Basisreaktionskomponente B und die flüssigen Reaktionskomponente R1, R2 bilden jeweilige Reaktionssysteme, die durch chemische Reaktion miteinander einen festen vernetzten Kunststoff erzeugen. Bevorzugte Polymeraufbaureaktionen ist die Polyadditionsreaktion. Bevorzugt erzeugte Kunststoffe sind Polyurethane, als Polymere, die nach dem Di-(oder Poly)isocyanat-Polyadditionsverfahren hergestellt werden und meistens die Urethan-Gruppe als charakteristisches Strukturelement enthalten.

Die Basisreaktionskomponente B enthält beispielsweise höhermolekulare Oligomere und/oder Präpolymere, die mindestens zwei gegenüber Isocyanaten reaktive Wasserstoffatome aufweisen, die aus der Gruppe der primären Alkohole, sekundären Alkohole, Phenole, primären Amine und/oder sekundären Aminen stammen. Insbesondere zu nennen sind Polyole ausgewählt aus der Gruppe Polyether-Polyole und Polyesterpolyole, wie sie erhalten werden durch Addition von Alkylenoxyden, wie Ehylenoxid und Propylenoxid, an mehrfunktionelle Starter, wie Ethylenglykol, Propylenglykol, Glycerin, Trimethylolpropan, Sucrose, Sorbit und/oder Ethylendiamin, oder durch Kondensation von Dicarbonsäuren, wie Adipinsäure, Bernsteinsäure, Glutsäure, Korksäure, Sebacinsäure, Maleinsäure und/oder Glutarsäure, mit überwiegend bifunktionellen Hydroxykomponenten, wie Ethylenglykol und/oder Propylenglykol, aufgebaut aus Ethylenoxyd und/oder Propylenoxyd sowie Glycerin, Trimethylolpropan, Ethyldiamin, Propylenglykol, Ethylenglykol, Sorbit oder deren Gemische als Starter.

Die Reaktionskomponenten R1, R2 enthalten organische Polyisocyanate und/oder Polyisocyanatpräpolymere, wobei die an sich bekannten aliphatischen, cycloaliphatischen, araliphatischen und vorzugsweise aromatischen mehrkernigen Isocyanate oder durch Reaktion verkappte Isocyanate zur Anwendung kommen können. Besonders geeignet sind die Toluylendiisocyanate und die Diphenylmethandiisocyanate, deren Modifizierungsprodukte oder ihre entsprechenden Präpolymere. Insbesondere werden als aromatische Polyisocyanate genannt. 4,4'-Diphenylmethandiisocyanat, Mischungen aus 2,4'- und 4,4'-Diphenylmethandiisocyanat, Roh-MDI-Typen oder polymeres MDI und/oder 2,4- und/oder 2,6 Toluylendiisocyanat sowie deren Mischungen untereinander.

Sowohl die Basisreaktionskomponente B als auch die Reaktionskomponenten R1, R2 können neben den eigentlichen Reaktionspartnern noch Hilfs- und Zusatzstoffe, wie beispielsweise Katalysatoren/Aktivatoren, Kettenverlängerer, Vernetzer, Stabilisatoren und Füllstoffe, enthalten.

Als Basisreaktionskomponente B kann bei dem oben beschriebene Ausführungsbeispiel für das Herstellungsverfahren beispielsweise das Isocynat Lupranat M20W der Firma Elastogran GmbH, Lemförde verwendet werden, dem 0,1 - 5% eines geeigneten Katalysator beigemischt werden. Als Reaktionskomponente R1 wird Lupranol 3300, Hersteller Elastogran GmbH, verwendet. Bei der Reaktionskomponente R2 handelt es sich bei diesem Ausführungsbeispiel um Lupranol 1100. Die Bauraumtemperatur beträgt zwischen 25 und 70°C, die Düsenbetriebstemperatur zwischen 50 und 90°C.

Es kann vorgesehen sein, daß der Reaktion zwischen Basisreaktionskomponente B und der Reaktionskomponente R1 und/oder der Reaktion zwischen Basisreaktionskomponente B und der Reaktionskomponente R2 bei Kontakt eine weitere Behandlung der gebildeten Schichtanordnung nachgeschaltet wird, beispielsweise eine Lichtbestrahlung oder ein Erwärmen, um zum Beispiel eine weitere Verfestigung bis hin zur Aushärtung des Materials zu erreichen. Die Nachbehandlung kann dazu führen, daß die beim Kontaktieren begonnene Reaktion der Reaktionspaare fortgesetzt oder eine weitere Reaktion initiiert wird.

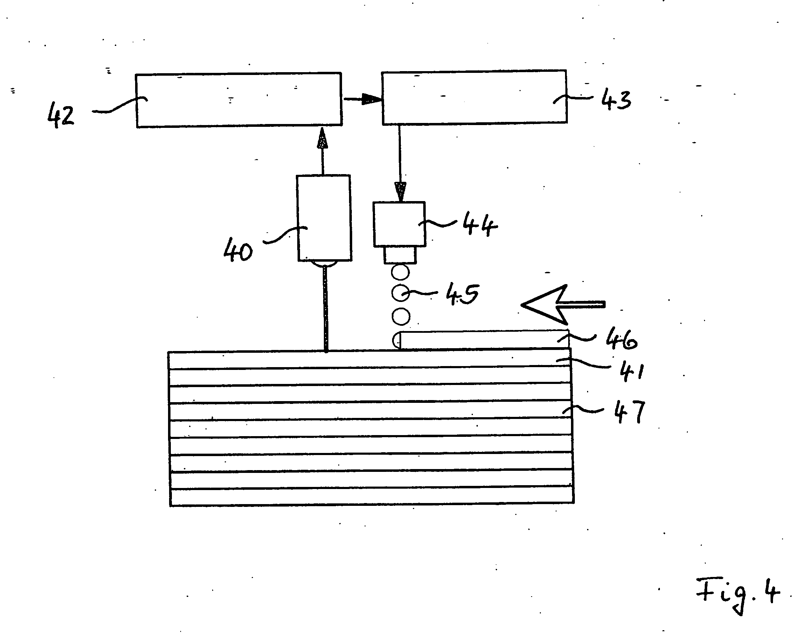

Fig. 4 zeigt eine schematische Darstellung zur Erläuterung eines Verfahrens, bei dem während des schichtweisen Auftrags die Schichtdicke einer aktuell aufzutragenden Schicht in Abhängigkeit von Meßdaten für die Schichtdicke einer vorher aufgetragenen Schicht geregelt wird. Zu diesem Zweck werden mit Hilfe einer Abstandsmeßeinrichtung 40 Meßdaten aufgenommen, die Rückschlüsse über die Dicke einer zuletzt aufgetragenen Schicht 41 erlauben. Die Abstandsmessung wird bevorzugt mit Hilfe eines optischen Abstandsmeßverfahren ausgeführt. Die Meßdaten werden an eine Auswerteeinrichtung 42 übertragen, welche die Meßdaten auswertet. Von der Auswerteeinrichtung 42 werden dann Steuersignale an eine Steuereinrichtung 43 übertragen, die mit einer Düsenanordnung 44 gekoppelt ist. Auf Basis der Steuersignale werden in der Steuereinrichtung 43 Düsensteuersignale erzeugt und an die Düsenanordnung 44 übertragen, um die Düsenanordnung 44 in Abhängigkeit von den mit Hilfe der Abstandsmeßeinrichtung 40 erfaßten Meßdaten zu steuern. Auf diese Weise kann beispielsweise das Tropfenvolumen von ausgestoßenen Tropfen 45 beim Auftragen einer aktuellen Schicht 46 vermindert werden, wenn festgestellt wird, daß die Dicke der zuletzt aufgetragenen Schicht 41 größer als ursprünglich beabsichtigt ist. Umgekehrt kann das Tropfenvolumen der Tropfen 45 vergrößert werden, wenn die zuletzt aufgetragene Schicht 41 zu dünn ist. Mit Hilfe des beschriebenen Verfahrens ist während des gesamten Schichtauftrags zum Ausbilden eines dreidimensionalen Artikels 47 eine fortdauernde Überwachung einer exakten Schichtausbildung gewährleistet.

Das in Verbindung mit Fig. 4 beschriebene Verfahren zur automatischen Schichtdickenüberwachung kann nicht nur im Zusammenhang mit sämtlichen Verfahrensvarianten und Vorrichtungen, die oben unter Bezugnahme auf die Fig. 1 bis 3 beschrieben wurden, sondern auch mit beliebigen anderen Verfahren zum Ausbilden dreidimensionaler Artikel mittels schichtweisem Auftrag genutzt werden. Der Schichtauftrag kann hierbei mit Hilfe eines Reaktionssystems aus Basisreaktionskomponente und Reaktionskomponente. Gegebenenfalls kann ein weiteres Reaktionssystem aus Basisreaktionskomponente und einer weiteren Reaktionskomponente genutzt werden, wie dies oben beschrieben wurde. Der Auftrag der Basiskomponente kann tropfenweise oder als Schicht erfolgen.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Herstellen eines dreidimensionalen Artikels aus einem Material mittels schichtweisem Auftrag auf einer Unterlage (1), bei dem:
a. ein Tropfenauftrag ausgeführt wird, bei dem Tropfen von Reaktionskomponenten (R1, R2) mittels einer Düsenanordnung (3) ausgestoßen und auf eine Basisreaktionskomponente (B) aufgetragen werden;
b. das Material für den dreidimensionalen Artikel gebildet wird, wenn bei Kontakt die Basisreaktionskomponente (B) mit den Reaktionskomponenten (R1, R2) jeweils reagiert, wobei das Material bei einer Reaktion der Basisreaktionskomponente (B) mit einer der Reaktionskomponenten (R1) als Material mit einer Materialeigenschaft (E1) und bei einer anderen Reaktion der Basisreaktionskomponente (B) mit einer anderen der Reaktionskomponenten (R2) als Material mit einer anderen Materialeigenschaft (E2) gebildet wird, wobei die Schritte a. und b. zum Bilden des dreidimensionalen Artikels mehrfach wiederholt werden; und
c. ein Artikelabschnitt mit einem graduellen Übergang zwischen der einen Materialeigenschaft (E1) und der anderen Materialeigenschaft (E2) erzeugt wird, indem:
c1. in einem Endbereich des Artikelabschnitts beim Tropfenauftrag erste Reaktionsparameter für die Tropfen der einen Reaktionskomponente (R1) und die Tropfen der anderen Reaktionskomponente (R2) eingestellt werden, so daß in dem Endbereich des Artikelabschnitts nach dem Tropfenauftrag überwiegend oder ausschließlich das Material mit der einen Materialeigenschaft (E1) gebildet wird;
c2. in einem entgegengesetzten Endbereich des Artikelabschnitts beim Tropfenauftrag zweite Reaktionsparameter für die Tropfen der einen Reaktionskomponente (R1) und die Tropfen der anderen Reaktionskomponente (R2) eingestellt werden, so daß in dem anderen Endbereich des Artikelabschnitts nach dem Tropfenauftrag überwiegend oder ausschließlich das Material mit der anderen Materialeigenschaft (E2) gebildet wird; und
c3. in einem Zwischenbereich des Artikelabschnitts zwischen den beiden Endbereichen beim Verlagern der Düsenanordnung (3) von dem Endbereich zu dem entgegengesetzten Endbereich beim Tropfenauftrag veränderliche Zwischenreaktionsparameter für die Tropfen der einen Reaktionskomponente (R1) und die Tropfen der anderen Reaktionskomponente (R2) eingestellt werden, so daß ein gradueller Übergang zwischen den ersten Reaktionsparametern und den zweiten Reaktionsparametern ausgeführt wird.

2. Verfahren nach Anspruch 1, **dadurch gekennzeichnet, daß** die Basisreaktionskomponente (B) tröpfchenweise mit Hilfe der Düsenanordnung (3) ausgebracht wird und zumindest beim Erzeugen des Materials in dem Zwischenbereich des Artikelabschnitts jeder ausgebrachte Tropfen der Basisreaktionskomponente (B) mit einem Tropfen der einen Reaktionskomponente (R1) und mit einem Tropfen der anderen Reaktionskomponente (R2) in Kontakt gebracht wird, wodurch mit Hilfe jedes Tropfens der Basisreaktionskomponente (B) sowohl Material mit der einen Materialeigenschaft (E1) als auch Material mit der anderen Materialeigenschaft (E2) gebildet wird.

3. Verfahren nach Anspruch 2, dadurch gek**e**nnzeichnet, daß die Tropfen der Basisreaktionskomponente (B) und die Tropfen der Reaktionskomponente(n) (R1, R2) im Flug in Kontakt gebracht werden.

4. Verfahren nach Anspruch 1, **dadurch gekennzeichnet, daß** die Tropfen der Reaktionskomponenten (R1, R2) auf eine Schicht der Basisreaktionskomponente (B) aufgetragen werden.

5. Verfahren nach einem der vorangehenden Ansprüche, **dadurch gekennzeichnet, daß** der Artikelabschnitt mit dem graduellen Übergang innerhalb einer aufgetragenen Schicht erzeugt wird.

6. Verfahren nach einem der vorangehenden Ansprüche, **dadurch gekennzeichnet, daß** der Artikelabschnitt mit dem graduellen Übergang über mehrere der aufgetragenen Schicht erzeugt wird.

7. Verfahren nach einem der vorangehenden Ansprüche, **dadurch gekennzeichnet, daß** beim Eistellen der ersten Reaktionsparameter, der zweiten Reaktionsparameter und der veränderlichen Zwischenreaktionsparameter ein jeweiliges Tropfenvolumen für die Tropfen der einen Reaktionskomponente (R1) und/oder die Tropfen der anderen Reaktionskomponente (R2) eingestellt wird.

8. Verfahren nach einem der vorangehenden Ansprüche, **dadurch gekennzeichnet, daß** beim Eistellen der ersten Reaktionsparameter, der zweiten Reaktionsparameter und der veränderlichen Zwischenreaktionsparameter eine jeweilige chemische Zusammensetzung für die Tropfen der einen Reaktionskomponente (R1) und/oder die Tropfen der anderen Reaktionskomponente (R2) eingestellt wird.

9. Verfahren nach einem der vorangehenden Ansprüche, **dadurch gekennzeichnet, daß** beim Eistellen der ersten Reaktionsparameter, der zweiten Reaktionsparameter und der veränderlichen Zwischenreaktionsparameter eine jeweilige Temperatur für die Tropfen der einen Reaktionskomponente (R1) und/oder die Tropfen der anderen Reaktionskomponente (R2) eingestellt wird.

10. Verfahren nach einem der vorangehenden Ansprüche, **dadurch gekennzeichnet, daß** beim Eistellen der ersten Reaktionsparameter, der zweiten Reaktionsparameter und der veränderlichen Zwischenreaktionsparameter eine jeweilige zeitliche Verzögerung für das Ausstoßen der Tropfen der einen Reaktionskomponente (R1) und/oder der Tropfen der anderen Reaktionskomponente (R2) mit Hilfe der Druckdüsenanordnung eingestellt wird.

11. Verfahren nach einem der vorangehenden Ansprüche, **dadurch gekennzeichnet, daß** beim Eistellen der ersten Reaktionsparameter, der zweiten Reaktionsparameter und der veränderlichen Zwischenreaktionsparameter eine jeweilige Ausstoßkraft für das Ausstoßen der Tropfen der einen Reaktionskomponente (R1) und/oder der Tropfen der anderen Reaktionskomponente (R2) mit Hilfe der Druckdüsenanordnung eingestellt wird.

12. Verfahren nach einem der vorangehenden Ansprüche, **dadurch gekennzeichnet, daß** die Basisreaktionskomponente (B) und die eine Reaktionskomponente (R1) sowie die Basisreaktionskomponente (B) und die andere Reaktionskomponente (R2) jeweils ein Reaktionssystem bilden, mit dem bei der Reaktion nach dem Kontakt ein jeweiliger fester vernetzter Kunststoff gebildet wird.

13. Verfahren nach Anspruch 12, **dadurch gekennzeichnet, daß** der jeweilige vernetzte Kunststoffe mit Hilfe einer Polyadditionsreaktion gebildet wird.

14. Verfahren nach Anspruch 12 oder 13, **dadurch gekennzeichnet, daß** die als Basisreaktionskomponente (B) eine Verbindung mit mindestens zwei gegenüber Isocyanaten reaktiven Wasserstoffatomen und als Reaktionskomponenten (R1, R2) sich voneinander unterscheidende organische und/oder modifizierte organische Polyisocyanate und/oder Polyisocanatpräpolymere verwendet werden.

15. Verfahren nach einem der vorangehenden Ansprüche, **dadurch gekennzeichnet, daß** die Basisreaktionskomponente (B) und/oder die Reaktionskomponenten (R1, R2) mit einer Viskosität zwischen etwa 0.5 und 50mPa bei einer vorbestimmten Dosierungstemperatur verwendet werden.

16. Verfahren nach einem der vorangehenden Ansprüche, **dadurch gekennzeichnet, daß** die Basisreaktionskomponente (B) und/oder die Reaktionskomponenten (R1, R2) mit einer Grenzflächenspannung zwischen etwa 20 und 70mN/m bei einer vorbestimmten Dosierungstemperatur verwendet werden.

## Claims

1. A method for producing a three-dimensional article from a material by means of layer-by-layer application to a substrate (1), in which:
a. a dropwise application is performed, in which drops of the reaction components (R1, R2) are extruded by means of a nozzle arrangement (3) and applied to a basic reaction component (B);
b. the material for the three-dimensional article is formed when the basic reaction component (B) reacts with each of the reaction components (R1, R2) on contact, wherein the material is formed in the reaction of the basic reaction component (B) with one of the reaction components (R1) as a material having a material property (E1), and in another reaction of the basic reaction component (B) it reacts with another one of the reaction components (R2) as a material with another material property (E2), wherein steps a. and b. are repeated several times to form the three-dimensional article; and
c. an article section having a gradual transition between the one material property (E1) and the other material property (E2) is created, in that
c1 first reaction parameters for the drops of the one reaction component (R1) and the drops of the other reaction component (R2) are adjusted in an end area of the article section in the dropwise application, so that the material with the one material property (E1) is formed primarily or exclusively in the end area of the article section after dropwise application;
c2. in the opposite end area of the article section, the second reaction parameters for the drops of the one reaction component (R1) and the drops of the other reaction component (R2) are adjusted in the dropwise application, so that the material with the other material property (E2) is formed primarily or exclusively in the other end area of the article section after the dropwise application; and
c3. in an intermediate area of the article section between the two end areas in shifting the nozzle arrangement (3) from the end area to the opposite end area in the dropwise application, variable intermediate reaction parameters for the drops of the one reaction component (R1) and the drops of the other reaction component (R2) are adjusted so that a gradual transition between the first reaction parameters and the second reaction parameters is implemented.

2. The method according to Claim 1, **characterized in that** the basic reaction component (B) is applied by drops with the help of the nozzle arrangement (3) and each applied drop of the basic reaction component (B) is brought into contact with a drop of the one reaction component (R1) and with a drop of the other reaction component (R2) at least in creating the material in the intermediate area of the article section, so that both the material with the one material property (E1) and the material with the other material property (E2) are formed with the help of each drop of the basic reaction component (B).

3. The method according to Claim 2, **characterized in that** the drops of the basic reaction component (B) and the drops of the reaction component(s) (R1, R2) are brought into contact in flight.

4. The method according to Claim 1, **characterized in that** the drops of the reaction components (R1, R2) are applied to a layer of the basic reaction component (B).

5. The method according to any one of the preceding claims, **characterized in that** the article section having the gradual transition is created within an applied layer.

6. The method according to any one of the preceding claims, **characterized in that** the article section having the gradual transition is created over several layers of the applied layers.

7. The method according to any one of the preceding claims, **characterized in that** in adjusting the first reaction parameters, the second reaction parameters and the variable intermediate reaction parameters, the respective drop volume for the drops of the one reaction component (R1) and/or the drops of the other reaction component (R2) is set.

8. The method according to any one of the preceding claims, **characterized in that** in adjusting the first reaction parameters, the second reaction parameters and the variable intermediate reaction parameters, a respective chemical composition for the drops of the one reaction component (R1) and/or the drops of the other reaction component (R2) is set.

9. The method according to any one of the preceding claims, **characterized in that** in adjusting the first reaction parameters, the second reaction parameters and the variable intermediate reaction parameters, a respective temperature for the drops of the one reaction component (R1) and/or the drops of the other reaction component (R2) is set.

10. The method according to any one of the preceding claims, **characterized in that** in adjusting the first reaction parameters, the second reaction parameters and the variable intermediate reaction parameters, a respective time lag for extrusion of the drops of the one reaction component (R1) and/or the drops of the other reaction component (R2) is adjusted with the help of the pressurized nozzle arrangement

11. The method according to any one of the preceding claims, **characterized in that** in adjusting the first reaction parameters, the second reaction parameters and the variable intermediate reaction parameters, the respective output force for output of the drops of the one reaction component (R1) and/or the drops of the other reaction component (R2) is adjusted with the help of the pressurized nozzle arrangement

12. The method according to any one of the preceding claims, **characterized in that** the basic reaction component (B) and the one reaction component (R1) as well as the basic reaction component (B) and the other reaction component (R2) each form a reaction system with which, after they come in contact, a respective solid crosslinked plastic is formed in the reaction.

13. The method according to Claim 12, **characterized in that** the respective crosslinked plastics are formed with the help of a polyaddition reaction.

14. The method according to Claim 12 or 13, **characterized in that** a compound with at least two hydrogen atoms that are reactive with isocyanates is used as the basic reaction component (B) and mutually differing organic and/or modified organic polyisocyanates and/or polyisocyanate prepolymers are used as reaction components (R1, R2).

15. The method according to any one of the preceding claims, **characterized in that** the basic reaction component (B) and/or the reaction components (R1, R2) with a viscosity between approximately 0.5 mPa and 50 mPa are used at a predetermined dosing temperature.

16. The method according to any one of the preceding claims, **characterized in that** the basic reaction component (B) and/or the reaction components (R1, R2) with an interfacial tension between approximately 20 mN/m and 70 mN/m are used at a predetermined dosing temperature.

## Revendications

1. Procédé de fabrication d'un article tridimensionnel en une matière par application en couches sur un support (1), lors duquel :
a. on procède à une application par gouttes, consistant à expulser des gouttes de composants réactifs (R1, R2) au moyen d'un dispositif de tuyères (3) et à les appliquer sur un composant réactif de base (B) ;
b. la matière pour l'article tridimensionnel se forme lorsqu'au contact, le composant réactif de base (B) réagit respectivement avec les composants réactifs (R1, R2), lors de la réaction du composant (B) avec l'un des composants réactifs (R1), la matière se forme en tant que matière disposant d'une propriété de matière (E1) et lors d'une autre réaction du composant réactif de base (B) avec un autre des composants réactifs (R2), elle se forme en tant que matière disposant d'une autre propriété de matière (E2), les étapes a. et b. pour la formation de l'article tridimensionnel étant répétées plusieurs fois ; et
c. une partie d'article avec un passage graduel de l'une des propriétés de matière (E1) vers l'autre propriété de matière (E2) est créée en ce que :
c1. dans une zone d'extrémité de la partie d'article, lors de l'application par gouttes, des premiers paramètres de réaction sont réglés pour les gouttes de l'un des composants réactifs (R1) et pour les gouttes de l'autre composant réactif (R2), de sorte que dans la zone d'extrémité de la partie d'article, après l'application par gouttes, il se forme en majeure partie ou exclusivement la matière avec l'une des propriétés de matière (E1);
c2. dans une zone d'extrémité opposée de la partie d'article, lors de l'application par gouttes, des deuxièmes paramètres de réaction sont réglés pour les gouttes de l'un des composants réactifs (R1) et pour les gouttes de l'autre composant réactif (R2), de sorte que dans l'autre zone d'extrémité de la partie d'article, après l'application par gouttes, il se forme en majeure partie ou exclusivement la matière avec l'autre propriété de matière (E2) ;
c3. dans une zone intermédiaire de la partie d'article, entre les deux zones d'extrémité, lors du déplacement du dispositif de tuyères (3) de la zone d'extrémité vers la zone d'extrémité opposée, lors de l'application par gouttes, des paramètres de réaction intermédiaires sont réglés pour les gouttes de l'un des composants réactifs (R1) et pour les gouttes de l'autre composant réactif (R2), de sorte à réaliser un passage graduel des premiers paramètres de réaction vers les deuxièmes paramètres de réaction.

2. Procédé selon la revendication 1, **caractérisé en ce qu'**on applique le composant réactif de base (B) par gouttelettes à l'aide du dispositif de tuyères (3) et au moins lors de la création de la matière dans la zone intermédiaire de la partie d'article, chaque goutte distribuée du composant réactif de base (B) est amenée en contact avec une goutte de l'un des composants réactifs (R1) et avec une goutte de l'autre composant réactif (R2), suite à quoi à l'aide de chaque goutte du composant réactif de base (B) aussi bien de la matière avec l'une des propriétés de matière (E1) que de la matière avec l'autre propriété de matière (E2) se forme.

3. Procédé selon la revendication 2, **caractérisé en ce que** les gouttes du composant réactif de base (B) et les gouttes du/des composant(s) réactif(s) (R1, R2) sont amenées en contact à la volée.

4. Procédé selon la revendication 1, **caractérisé en ce qu'**on applique les gouttes des composants réactifs (R1, R2) sur une couche du composant réactif de base (B).

5. Procédé selon l'une quelconque des revendications précédentes, **caractérisé en ce qu'**on créé la partie d'article avec le passage graduel à l'intérieur d'une couche appliquée.

6. Procédé selon l'une quelconque des revendications précédentes, **caractérisé en ce qu'**on créé la partie d'article avec le passage graduel sur plusieurs des couches appliquées.

7. Procédé selon l'une quelconque des revendications précédentes, **caractérisé en ce que** lors du réglage des premiers paramètres de réaction, des deuxièmes paramètres de réaction et des paramètres de réaction intermédiaires variables, on règle un volume de gouttes adéquat pour les gouttes de l'un des composants réactifs (R1) et/ou pour les gouttes de l'autre composant réactif (R2).

8. Procédé selon l'une quelconque des revendications précédentes, **caractérisé en ce que** lors du réglage des premiers paramètres de réaction, des deuxièmes paramètres de réaction et des paramètres de réaction intermédiaires variables, on règle une composition chimique adéquate pour les gouttes de l'un des composants réactifs (R1) et/ou pour les gouttes de l'autre composant réactif (R2).

9. Procédé selon l'une quelconque des revendications précédentes, **caractérisé en ce que** lors du réglage des premiers paramètres de réaction, des deuxièmes paramètres de réaction et des paramètres de réaction intermédiaires variables, on règle une température adéquate pour les gouttes de l'un des composants réactifs (R1) et/ou pour les gouttes de l'autre composant réactif (R2).

10. Procédé selon l'une quelconque des revendications précédentes, **caractérisé en ce que** lors du réglage des premiers paramètres de réaction, des deuxièmes paramètres de réaction et des paramètres de réaction intermédiaires variables, on règle une temporisation adéquate pour les gouttes de l'un des composants réactifs (R1) et/ou pour les gouttes de l'autre composant réactif (R2) à l'aide du dispositif de tuyères sous pression.

11. Procédé selon l'une quelconque des revendications précédentes, **caractérisé en ce que** lors du réglage des premiers paramètres de réaction, des deuxièmes paramètres de réaction et des paramètres de réaction intermédiaires variables, on règle une force d'expulsion adéquate pour l'expulsion des gouttes de l'un des composants réactifs (R1) et/ou des gouttes de l'autre composant réactif (R2) à l'aide du dispositif de tuyères sous pression.

12. Procédé selon l'une quelconque des revendications précédentes, **caractérisé en ce que** le composant réactif de base (B) et l'un des composants réactifs (R1), ainsi que le composant réactif de base (B) et l'autre composant réactif (R2) forment chaque fois un système réactif, avec lequel lors de la réaction après le contact, il se forme une matière plastique solide réticulée adéquate.

13. Procédé selon la revendication 12, **caractérisé en ce que** la matière plastique réticulée adéquate se forme à l'aide d'une réaction de polyaddition.

14. Procédé selon la revendication 12 ou 13, **caractérisé en ce qu'**on utilise en tant que composant réactif de base (B) un composé avec au moins deux atomes d'hydrogène réactifs aux isocyanates et en tant que composants réactifs (R1, R2) des polyisocyanates et/ou des prépolymères de polyisocyanates organiques et/ou modifiés, différents les uns des autres.

15. Procédé selon l'une quelconque des revendications précédentes, **caractérisé en ce qu'**on utilise le composant réactif de base (B) et/ou les composants réactifs (R1, R2) d'une viscosité comprise entre 0.5 und 50mPa à une température de dosage prédéfinie.

16. Procédé selon l'une quelconque des revendications précédentes, **caractérisé en ce qu'**on utilise le composant réactif de base (B) et/ou les composants réactifs (R1, R2) d'une tension superficielle limite comprise entre 20 und 70mN/m à une température de dosage prédéfinie.
